# EUROPEAN PATENT APPLICATION

(11) **EP 4 184 354 A1**
(43) Date of publication of application: **24.05.2023**
(21) Application number: 22204959.5
(22) Date of filing: 01.11.2022
(51) Int. Cl.: G06F 21/32, G06F 21/34, G06V 40/00, G07C 9/25, H04L 9/40

(54) **AUTHENTICATION METHOD FOR AUTHENTICATING A USER USING BIOMETRICS AND DIGITIZED HANDWRITTEN SIGNATURE**

(30) Priority: 17.11.2021 TW 110142785
(71) Applicant: Wang, William, New Taipei City 22041 (TW); Su, Yu-Sung, New Taipei City 22041 (TW)
(72) Inventor: Wang, William, New Taipei City 22041 (TW); Su, Yu-Sung, New Taipei City 22041 (TW)
(74) Representative: Murgitroyd & Company

(57) **Abstract**

An authentication method is provided for authenticating a user using biometrics and digitized handwritten signature. A user uses a biometric stylus (3) and a handwriting input device (4) to create a handwriting pattern, where the biometric stylus (3) acquires fingerprint data of the user. The handwriting input device (4) transmits the fingerprint data and the handwriting pattern to a verification server (5). The verification server (5) verifies the handwriting pattern and the fingerprint data, and obtains user identification data for verifying an identity of the user when the handwriting pattern and the fingerprint data are successfully verified.

## Description

The disclosure relates to a digital signature system, and more particularly to a method and a system for authenticating a user using biometrics and digitized handwritten signature.

With the advancement of technology, digitized handwritten signatures (handwritten signatures that are inputted electronically) have become a common means for customer identification in the banking industry and for merchants to confirm customer signatures. In order to obtain a signature electronically, usually, a touch pad or signature capture pad is provided for a customer to sign with a stylus, and then the signature handwriting or the signature screen on the touch pad is captured for signature authentication.

However, since the signature handwriting can be imitated and digitized signature files can be forged by other means and uploaded for verification, the industry is unable to confirm whether the person who provides the signature is the real owner of the signature, which may result in transaction disputes.

Therefore, an object of the disclosure is to provide an authentication method and a system for authenticating a user using biometrics and digitized handwritten signature. The method can alleviate at least one of the drawbacks of the prior art.

According to some embodiments of the disclosure, the authentication method includes a first procedure that is associated with fingerprint acquisition, a second procedure that is associated with handwriting acquisition, and a third procedure that is associated with user identification. The first procedure includes a step of, by a biometric stylus that includes a fingerprint sensor, sensing a fingerprint of the user to acquire a piece of fingerprint data, and generating a piece of first verification data that is encrypted and that includes the fingerprint data. The second procedure includes steps of: by a handwriting input device, receiving the first verification data from the biometric stylus; by the handwriting input device, acquiring a handwriting pattern that is inputted on the handwriting input device through touch sensing using the biometric stylus; and by the handwriting input device, generating a piece of second verification data that is encrypted, and that includes the first verification data and the handwriting pattern. The third procedure includes steps of: by a verification server, receiving the second verification data from the handwriting input device; by the verification server, decrypting the second verification data to obtain the first verification data and the handwriting pattern; by the verification server, decrypting the first verification data to obtain the fingerprint data when determining at least that the handwriting pattern matches a handwriting template of a piece of personal identification data stored in the verification server; and by the verification server, obtaining a piece of user identification data for verifying an identity of the user from the personal identification data when determining that the fingerprint data matches a fingerprint template of the personal identification data.

According to some embodiments of the disclosure, the authentication method includes a first procedure that is associated with fingerprint acquisition, a second procedure that is associated with handwriting acquisition, and a third procedure that is associated with user identification. The first procedure includes a step of, by a biometric stylus that includes a fingerprint sensor, sensing a fingerprint of the user to acquire a piece of fingerprint data, encrypting the fingerprint data to generate a piece of encrypted fingerprint data, and generating a piece of first verification data that includes the encrypted fingerprint data. The second procedure includes steps of: by a handwriting input device, receiving the first verification data from the biometric stylus, and obtaining the encrypted fingerprint data from the first verification data; by the handwriting input device, acquiring a handwriting pattern that is inputted on the handwriting input device through touch sensing using the biometric stylus; and by the handwriting input device, encrypting the encrypted fingerprint data and the handwriting pattern to generate a piece of second verification data. The third procedure includes steps of: by a verification server, receiving the second verification data from the handwriting input device, and decrypting the second verification data to obtain the encrypted fingerprint data and the handwriting pattern; by the verification server, decrypting the encrypted fingerprint data to obtain the fingerprint data when determining that the handwriting pattern matches a handwriting template of a piece of personal identification data stored in the verification server; and by the verification server, obtaining a piece of user identification data for verifying an identity of the user from the personal identification data when determining that the fingerprint data matches a fingerprint template of the personal identification data.

According to the disclosure, the system includes a biometric stylus that includes a fingerprint sensor, a handwriting input device and a verification server. The biometric stylus, the handwriting input device and the verification server cooperate to perform the method of this disclosure.

Other features and advantages of the disclosure will become apparent in the following detailed description of the embodiment(s) with reference to the accompanying drawings. It is noted that various features may not be drawn to scale.
FIG. 1 is a schematic diagram illustrating an embodiment of an authentication system according to the disclosure.
FIG. 2 is a flow chart illustrating procedures of embodiments of a method for authenticating a user using biometrics and digitized handwritten signature according to the disclosure.
FIG. 3 is a flow chart illustrating steps of a fingerprint acquisition procedure of a first embodiment of the method according to the disclosure.
FIG. 4 is a flow chart illustrating steps of a handwriting input procedure of the first embodiment.
FIG. 5 is a flow chart illustrating steps of a user identification procedure of the first embodiment.
FIG. 6 is a flow chart illustrating steps of a handwriting input procedure of a second embodiment of the method according to the disclosure.
FIG. 7 is a flow chart illustrating steps of a user identification procedure of the second embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

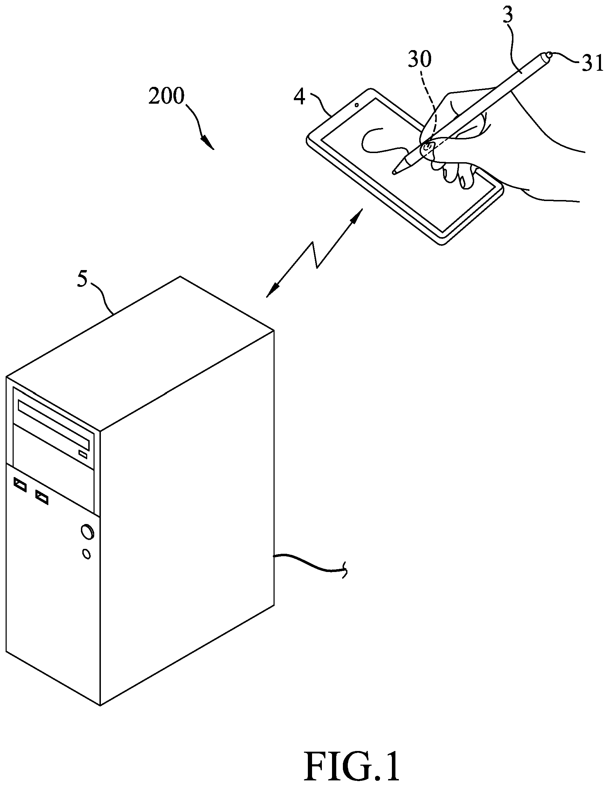

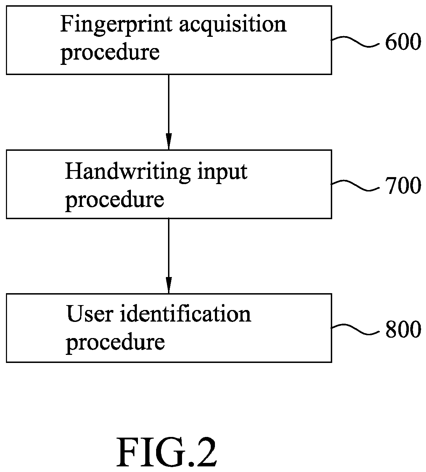

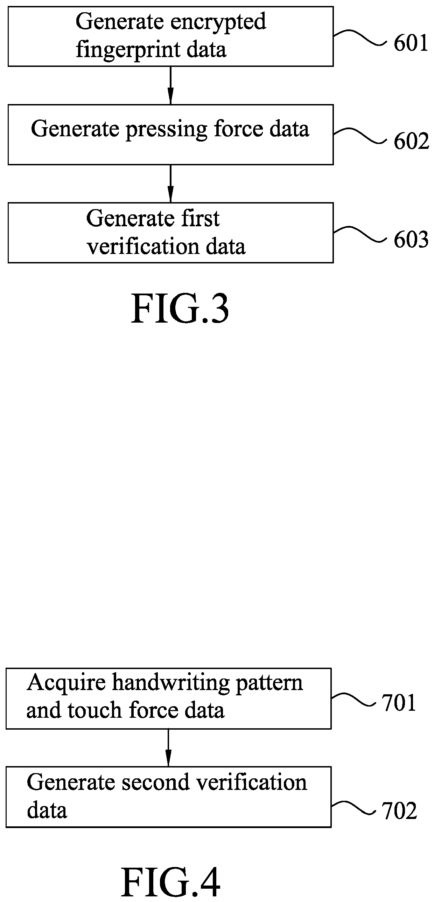

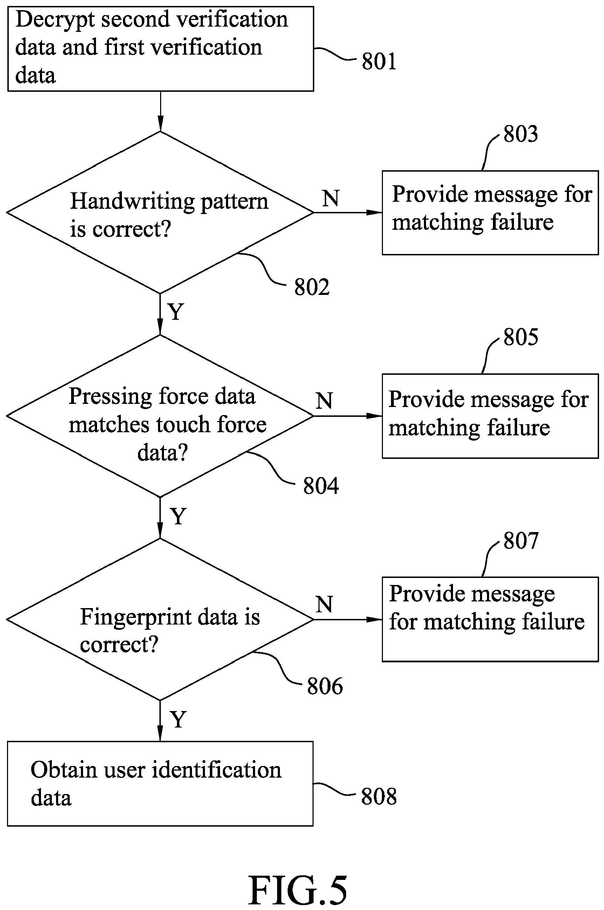

Referring to FIGS. 1 through 5, a first embodiment of a method for authenticating a user using biometrics and digitized handwritten signature according to this disclosure is adapted to be realized in an authentication system 200 by means of electric circuits, firmware and/or software programs, and is adapted for a user to perform identity verification in transactions at stores or banks. The authentication system 200 includes a biometric stylus 3, a handwriting input device 4 and a verification server 5 that cooperate to perform the method.

The biometric stylus 3 and the handwriting input device 4 are owned by a bank or a store. The biometric stylus 3 can be used to perform writing operation on the handwriting input device 4, includes a fingerprint sensor 30 to sense a fingerprint of the user, and a microcontroller (not shown) to perform data encryption, and is configured to communicate with the handwriting input device 4 through wired and/or wireless communication, so as to perform data transmission with the handwriting input device 4. The handwriting input device 4 is configured for touch operation, so the biometric stylus 3 can be used to perform writing on the handwriting input device 4 through touch sensing. The handwriting input device 4 may be realized as, for example, a touch pad, a credit card machine, a smartphone, a tablet computer, a notebook computer, etc., but this disclosure is not limited to such. The handwriting input device 4 is configured to communicate with the verification server 5 through wired and/or wireless communication, so as to perform data transmission with the verification server 5.

The verification server 5 may be, for example but not limited to, a transaction server of the bank or a point of sale (POS) machine of the store, and is configured to perform identity verification for the user based on data provided by the biometric stylus 3 and the handwriting input device 4. In some embodiments, the verification server 5 may be a third-party verification server that is configured to assist the bank or the store to perform third-party identity verification for the user through the transaction server or the POS machine. The verification server 5 stores a piece of personal identification data of the user that may be established through a user registration procedure. The personal identification data may include, for example but not limited to, a fingerprint template that corresponds to the user, a handwriting template that corresponds to a handwritten signature of the user, a piece of user identification data (e.g., a serial number of an identification card, a phone number, a membership number, or any other information that can be used for identity verification) of the user. The verification server 5 may store multiple pieces of personal identification data (e.g., each including a corresponding handwriting template) relating to multiple different users. Moreover, the verification server 5 may also store multiple handwriting templates for a same user.

The aforesaid wireless communication may include but not limited to any conventional network technology and/or mobile communication technology, such as Wi-Fi, Bluetooth, the fourth/fifth generation of mobile phone mobile communication technology standards (4G/5G), etc., and this disclosure is not limited to such.

The first embodiment of the method for authenticating a user using biometrics and digitized handwritten signature according to this disclosure includes a fingerprint acquisition procedure 600, a handwriting input procedure 700, and a user identification procedure 800. These procedures enable the verification server 5 to verify the identity of the user.

Referring to FIGS. 1, 2 and 3, the fingerprint acquisition procedure 600 includes steps 601 through 603.

In step 601, the user may hold the biometric stylus 3 with a to-be-sensed finger being in contact with the fingerprint sensor 30, so that the fingerprint sensor 30 senses or scans a fingerprint of the user to obtain a piece of fingerprint data, and encrypts the fingerprint data to obtain a piece of encrypted fingerprint data. Then, the flow goes to step 602.

In step 602, the biometric stylus 3 senses a pressing force on a tip of the biometric stylus 3 (e.g., using a force sensor disposed in the biometric stylus 3) when, for example, the biometric stylus 3 is used to abut against an object (e.g., the handwriting input device 4) with the tip thereof to perform writing on the object, so as to generate a piece of pressing force data. The pressing force data records writing strokes during a pressing period in which the biometric stylus 3 is used to write (e.g., perform a handwriting operation on the handwriting input device 4 via touch sensing), and may include, for example but not limited to, a record of variations of the pressing force applied to the tip of the biometric stylus 3 for each writing stroke during the pressing period, and a pressing time record that contains time points respectively of a beginning and an end of the record of variations of the pressing force for each writing stroke (i.e., starting time and end time of the writing stroke). In this embodiment, the biometric stylus 3 determines initiation and completion of a writing stroke based on continuous abutment of the tip that starts from a time point the tip of the biometric stylus 3 starts to be abutted against and that ends at a time point the tip of the biometric stylus 3 is released from abutment.

In this embodiment, the user may press a control button 31 of the biometric stylus 3 when completing the handwriting operation, so as to control the biometric stylus 3 to end acquisition of the pressing force data. In one embodiment, the biometric stylus 3 may determine that the handwriting operation is done and end acquisition of the pressing force data when the tip has not been pressed for over a predetermined length of time (e.g., several seconds, such as two or three seconds) after the acquisition of the fingerprint data. In one embodiment, the biometric stylus 3 may determine that the handwriting operation is done and end acquisition of the pressing force data when the fingerprint sensor 30 has not captured the fingerprint of the user for over a predetermined length of time (for example but not limited to, 0.5 or 1 second) after the acquisition of the fingerprint data.

In step 603, the biometric stylus 3 encrypts the encrypted fingerprint data and the pressing force data to generate a piece of first verification data, and transmits the first verification data to the handwriting input device 4.

Referring to FIGS. 1, 2 and 4, the handwriting input procedure 700 includes steps 701 and 702.

In step 701, the handwriting input device 4 acquires a handwriting pattern that corresponds to a plurality of touch points on the handwriting input device 4 and that represents a handwriting of the user as inputted via the handwriting input device 4, and a piece of touch force data of the touch points during a touch input period in which a handwriting operation is performed on the handwriting input device 4. The touch force data records writing strokes during the touch input period, and includes, for each writing stroke, a record of variations of touch forces applied to those of the touch points that correspond to the writing stroke (those of the touch points that are touched as the writing stroke is touch-inputted on the handwriting input device 4), and a touch time record that contains time points respectively of a beginning and an end of the record of variations of the touch forces (i.e., starting time and end time of the writing stroke). In this embodiment, the handwriting input device 4 determines initiation and completion of a writing stroke based on continuous touching on a touch screen or a touch pad (not shown) thereof that starts from a time point touching begins to be sensed by the touch screen or the touch pad to a time point the touch screen or the touch pad no longer senses the touching. During actual implementation, step 602 of the fingerprint verification procedure 600 and step 701 of the handwriting input procedure 700 may be performed simultaneously as the user performs a handwriting operation on the handwriting input device 4 using the biometric stylus 3. The handwriting input device 4 may end step 701 when the touch screen or the touch pad has not been touched for over a predetermined length of time of, for example but not limited to, several seconds (e.g., two or three seconds), and the flow goes to step 702.

In step 702, the handwriting input device 4 encrypts the first verification data, the handwriting pattern and the touch force data to generate a piece of second verification data, and transmits the second verification data to the verification server 5.

Referring to FIGS. 1, 2 and 5, the user identification procedure 800 includes steps 801 through 808.

In step 801, the verification server 5 decrypts the second verification data to obtain the first verification data, the handwriting pattern and the touch force data, and decrypts the first verification data to obtain the encrypted fingerprint data and the pressing force data. Then, the flow goes to step 802.

In step 802, the verification server 5 determines whether the handwriting pattern matches one of the handwriting templates that are stored in the verification server 5. When the verification server 5 determines that the handwriting pattern does not match any one of the handwriting templates (i.e., the handwriting pattern is incorrect), the authentication of the handwriting pattern fails, and the flow goes to step 803, where the verification server 5 generates and transmits an indication message that indicates a matching failure to the handwriting input device 4. When the verification server 5 determines that the handwriting pattern matches one of the handwriting templates (i.e., the handwriting pattern is correct), the verification server 5 screens out one of the multiple pieces of the personal identification data that includes the matched one of the handwriting templates, and the flow goes to step 804.

In step 804, the verification server 5 compares the pressing force data with the touch force data, and determines whether the pressing force data matches the touch force data. For example, the verification server 5 may compare the writing strokes as recorded by the pressing force data with the writing strokes as recorded by the touch force data one by one, following an order of sequence of the writing strokes (namely, with respect to each writing stroke of the writing operation, the verification server 5 compares the corresponding pressing force data with the corresponding touch force data). When making comparison with respect to each writing stroke, the verification server 5 may determine whether the pressing time record for the writing stroke matches the touch time record for the writing stroke, and whether the record of variations of the pressing force for the writing stroke matches the record of variations of the touch forces for the writing stroke.

Upon determining that the pressing force data does not match the touch force data (e.g., the pressing time record does not match the touch time record or the record of variations of the pressing force does not match the record of variations of the touch forces), which means that the handwriting pattern is not created using the biometric stylus 3, the flow goes to step 805, where the verification server 5 generates and transmits an indication message that indicates mismatching between the touch force data and the pressing force data to the handwriting input device 4.

Upon determining that the pressing force data matches the touch force data (e.g., the pressing time record matches the touch time record and the record of variations of the pressing force matches the record of variations of the touch forces), which means that the handwriting pattern was created using the biometric stylus 3, the flow goes to step 806.

In step 806, the verification server 5 decrypts the encrypted fingerprint data to obtain the fingerprint data, and uses conventional techniques to analyze and acquire feature points of the fingerprint data. The conventional techniques may include, for example but not limited to, image processing such as fingerprint area detection, image enhancement, image binarization, image thinning, etc., extraction of fingerprint patterns and detailed features, etc. Then, the verification server 5 determines whether the feature points of the fingerprint data match the fingerprint template of the personal identification data that was screened out in step 802. When the determination is negative, which means that the captured fingerprint does not match the fingerprint template of the personal identification data (i.e., the fingerprint data is incorrect), the flow goes to step 807, where the verification server 5 generates and transmits an indication message that indicates mismatching in fingerprint recognition to the handwriting input device 4, and terminates the transaction that corresponds to the identity authentication. When the determination is affirmative (i.e., the fingerprint data is correct), which means that the captured fingerprint matches the fingerprint template of the personal identification data, the flow goes to step 808.

In step 808, the verification server 5 obtains the user identification data included in the personal identification data that was screened out in step 802. In practice, the verification server 5 may transmit the user identification data thus obtained to the transaction server of the bank or the POS machine of the store, so that the transaction server or the POS machine can execute desired transaction operation based on the user identification data. Examples of the desired transaction operation may include but not limited to, cash withdrawal, payment operation, product ordering, and so on.

Through the abovementioned embodiment, when the user intends to perform a transaction at a bank or a store, he or she may use the biometric stylus 3 and the handwriting input device 4 provided by the bank or the store to input the fingerprint data and the handwriting pattern, respectively, and simultaneously, the biometric stylus 3 and the handwriting input device 4 also acquire the pressing force data and the touch force data, respectively. The verification server 5 compares not only the handwriting pattern with the handwriting templates and the fingerprint data with the fingerprint template of the personal identification data that contains a matched handwriting template, but also the pressing force data with the touch force data, so as to ensure that the handwriting pattern was created using the biometric stylus 3.The user identification data is obtained when the aforesaid comparisons result in successful matching so that the transaction server or the POS machine can complete the desired transaction operation based on the user identification data, thereby significantly enhancing accuracy of identity verification and security of transactions.

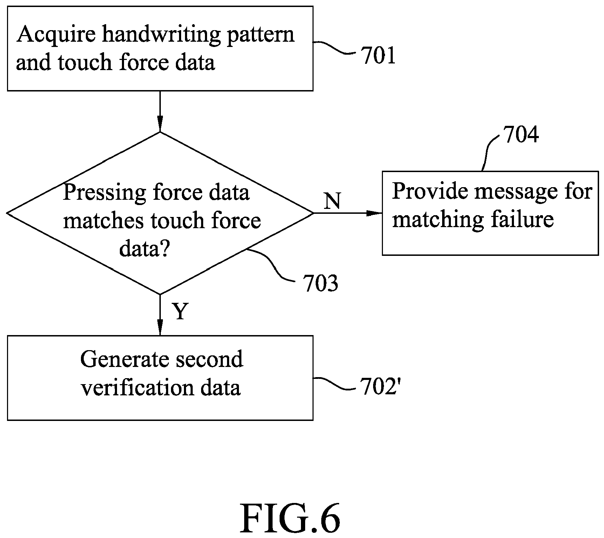

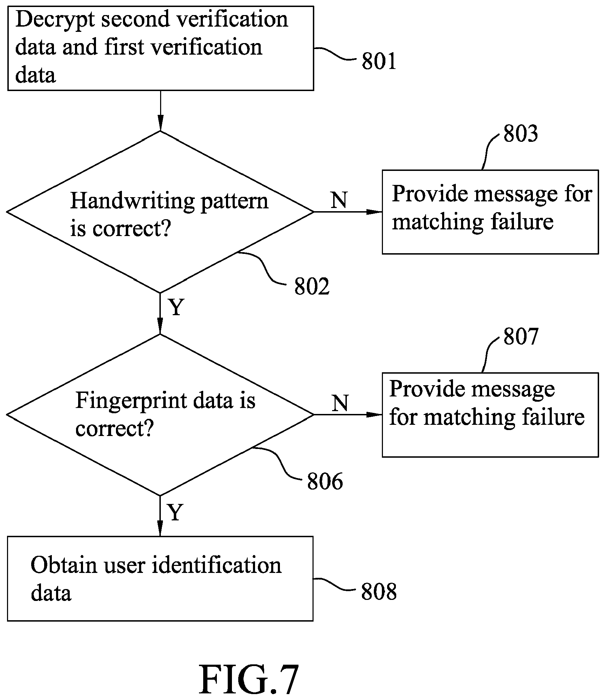

Referring to FIGS. 1, 2, 6 and 7, a second embodiment of a method for authenticating a user using biometrics and digitized handwritten signature according to this disclosure is provided. The second embodiment is similar to the first embodiment, and differs from the first embodiment in the handwriting input procedure 700 and the user identification procedure 800.

The handwriting input procedure 700 of the second embodiment includes steps 701, 702', 703 and 704. Step 701 of the second embodiment is the same as that of the first embodiment, so details thereof are omitted herein for the sake of brevity. After step 701, the flow goes to step 703.

In step 703, the handwriting input device 4 decrypts the first verification data to obtain the encrypted fingerprint data and the pressing force data, and analyzes and compares the pressing force data with the touch force data obtained in step 701, so as to determine whether the handwriting pattern was created using the biometric stylus 3. Upon determining that the pressing force data does not match the touch force data, the flow goes to step 704, where the handwriting input device 4 generates an indication message that indicates mismatching between the touch force data and the pressing force data. Otherwise, the flow goes to step 702'.

In step 702', the handwriting input device 4 encrypts the encrypted fingerprint data and the handwriting pattern to generate the second verification data, and transmits the second verification data to the verification server 5.

The user identification procedure 800 of the second embodiment includes steps 801 through 803 and 806 through 808.

Steps 801 through 803 of the second embodiment are similar to those of the first embodiment. In step 801 of the second embodiment, the verification server 5 decrypts the second verification data to obtain the encrypted fingerprint data and the handwriting pattern. In step 802, the verification server 5 compares the handwriting pattern with the handwriting templates, and, when the handwriting pattern matches one of the handwriting templates, screens out the personal identification data that includes the matched handwriting template. When the handwriting pattern is incorrect, the flow goes to step 803. Otherwise, the flow goes to step 806.

Steps 806 through 808 of the second embodiment are similar to those of the first embodiment. In step 806, the verification server 5 compares the fingerprint data with the fingerprint template of the personal identification data that is screened out in step 802. When the fingerprint data is incorrect, the flow goes to step 807. Otherwise, the flow goes to step 808, where the verification server 5 obtains the user identification data from the personal identification data that is screened out in step 802.

The first and second embodiments compare not only the handwriting pattern with the handwriting templates, but also the pressing force data with the touch force data. In some embodiments, the comparison between the pressing force data and the touch force data may be omitted, and the acquisitions of the pressing force data and the touch force data are thus not required. The combination of the verifications of the fingerprint and the handwriting pattern can promote the accuracy of identity verification and the security of transactions.

Since the first verification data is encrypted data, it is not necessary for the biometric stylus 3 to encrypt the fingerprint data in some embodiments. On the other hand, in embodiments that encrypt the fingerprint data in the fingerprint acquisition procedure 600, generation of the first verification data may involve no additional encryption (e.g., the first verification data can merely be the encrypted fingerprint data itself or a collection of the encrypted fingerprint data and the pressing force data).

In summary, through the embodiments of the method for authenticating a user using biometrics and digitized handwritten signature, when a user intends to perform an over-the-counter financial transaction in a bank or a payment transaction in a store and needs identity verification, the identity of the user can be immediately verified by the authentication system 200, and the accuracy of identity verification and the security of the transaction can be significantly promoted for the over-the-counter transaction in a bank or in a store.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. An authentication method for authenticating a user using biometrics and digitized handwritten signature, **characterized by**:
a first procedure (600) that is associated with fingerprint acquisition, and that includes a step of, by a biometric stylus (3) that includes a fingerprint sensor (30), sensing (601) a fingerprint of the user to acquire a piece of fingerprint data, and generating (603) a piece of first verification data that is encrypted and that includes the fingerprint data;
a second procedure (700) that is associated with handwriting acquisition, and that includes steps of:
by a handwriting input device (4), receiving the first verification data from the biometric stylus (3);
by the handwriting input device (4), acquiring (701) a handwriting pattern that is inputted on the handwriting input device (4) through touch sensing using the biometric stylus (3); and
by the handwriting input device (4), generating (702, 702') a piece of second verification data that is encrypted, and that includes the first verification data and the handwriting pattern; and
a third procedure (800) that is associated with user identification, and that includes steps of:
by a verification server (5), receiving the second verification data from the handwriting input device (4);
by the verification server (5), decrypting (801) the second verification data to obtain the first verification data and the handwriting pattern;
by the verification server (5), decrypting the first verification data to obtain the fingerprint data when determining (802) at least that the handwriting pattern matches a handwriting template of a piece of personal identification data stored in the verification server (5); and
by the verification server (5), obtaining (808) a piece of user identification data for verifying an identity of the user from the personal identification data when determining (806) that the fingerprint data matches a fingerprint template of the personal identification data.

2. The authentication method of claim 1, **characterized in that** the first procedure (600) further includes steps of:
by the biometric stylus (3), encrypting (601) the fingerprint data to obtain a piece of encrypted fingerprint data; and
by the biometric stylus (3), sensing (602) a pressing force on a tip thereof during a pressing period in which the tip is pressed to generate a piece of pressing force data; and
wherein the step of generating (603) the first verification data in the first procedure (600) is performed by encrypting the encrypted fingerprint data and the pressing force data;
wherein the handwriting pattern corresponds to a plurality of touch points on the handwriting input device (4), and the second procedure (700) further includes a step of:
by the handwriting input device (400), sensing (701) touch forces applied to the touch points as the handwriting pattern is being inputted on the handwriting input device (4) to generate a piece of touch force data;
wherein the step of generating (702, 702') the second verification data in the second procedure (700) is performed by encrypting the first verification data, the handwriting pattern and the touch force data; and
wherein, in the third procedure (800),
the step of decrypting (801) the second verification data is to obtain the first verification data, the handwriting pattern and the touch force data; and
the step of decrypting the first verification data is to obtain the encrypted fingerprint data and the pressing force data;
wherein the third procedure (800) further includes a step of:
by the verification server (5), decrypting the encrypted fingerprint data to obtain the fingerprint data upon determining (802) that the handwriting pattern matches the handwriting template and that the pressing force data matches the touch force data.

3. The authentication method of claim 2, **characterized in that** the pressing force data includes a record of variations of the pressing force applied to the tip of the biometric stylus (3) during the pressing period in which the biometric stylus (3) is used to perform writing on an object such that the tip of the biometric stylus (3) abuts against the object;
wherein the touch force data includes a record of variations of the touch forces applied to the touch points on the handwriting input device (4) during a touch input period in which the handwriting pattern is being inputted on the handwriting input device (4); and
wherein, in the third procedure (800), the verification server (5) determines (804) whether the pressing force data matches the touch force data by determining whether the record of variations of the pressing force matches the record of variations of the touch forces.

4. The authentication method of claim 3, **characterized in that** the pressing force data further includes a pressing time record that contains time points respectively of a beginning and an end of the record of variations of the pressing force;
wherein the touch force data further includes a touch time record that contains time points respectively of a beginning and an end of the record of variations of the touch forces; and
wherein, in the third procedure (800), the verification server (5) determines (804) whether the pressing force data matches the touch force data further by determining whether the pressing time record matches the touch time record.

5. An authentication method for authenticating a user using biometrics and digitized handwritten signature, **characterized by**:
a first procedure (600) that is associated with fingerprint acquisition, and that includes a step of, by a biometric stylus (3) that includes a fingerprint sensor (30), sensing (601) a fingerprint of the user to acquire a piece of fingerprint data, encrypting the fingerprint data to generate a piece of encrypted fingerprint data, and generating (603) a piece of first verification data that includes the encrypted fingerprint data;
a second procedure (700) that is associated with handwriting acquisition, and that includes steps of:
by a handwriting input device (4), receiving the first verification data from the biometric stylus, and obtaining the encrypted fingerprint data from the first verification data;
by the handwriting input device (4), acquiring (701) a handwriting pattern that is inputted on the handwriting input device (4) through touch sensing using the biometric stylus (3); and
by the handwriting input device (4), encrypting the encrypted fingerprint data and the handwriting pattern to generate (702, 702') a piece of second verification data; and
a third procedure (800) that is associated with user identification and that includes steps of:
by a verification server (5), receiving the second verification data from the handwriting input device (4), and decrypting (801) the second verification data to obtain the encrypted fingerprint data and the handwriting pattern;
by the verification server (5), decrypting the encrypted fingerprint data to obtain the fingerprint data when determining (802) that the handwriting pattern matches a handwriting template of a piece of personal identification data stored in the verification server (5); and
by the verification server (5), obtaining (808) a piece of user identification data for verifying an identity of the user from the personal identification data when determining (806) that the fingerprint data matches a fingerprint template of the personal identification data.

6. The authentication method of claim 5, **characterized in that** the first procedure (600) further includes a step of:
by the biometric stylus (3), sensing (602) a pressing force on a tip thereof during a pressing period in which the tip is pressed to generate a piece of pressing force data;
wherein the first verification data generated in the first procedure further includes the pressing force data;
wherein the handwriting pattern corresponds to a plurality of touch points on the handwriting input device (4), and the second procedure (700) further includes steps of:
by the handwriting input device (4), sensing (701) touch forces applied to the touch points as the handwriting pattern is being inputted on the handwriting input device (4) to generate a piece of touch force data; and
wherein the step of generating (702') the second verification data is performed by encrypting the encrypted fingerprint data of the first verification data and the handwriting pattern upon determining (703) that the pressing force data of the first verification data matches the touch force data.

7. The authentication method of claim 6, **characterized in that** the step of generating (603) the first verification data in the first procedure (600) is performed by encrypting the encrypted fingerprint data and the pressing force data; and
wherein the second procedure (700) further includes a step of, by the handwriting input device (4), decrypting the first verification data to obtain the encrypted fingerprint data and the pressing force data.

8. The authentication method of claim 6 or 7, **characterized in that** the pressing force data includes a record of variations of the pressing force applied to the tip of the biometric stylus (3) during the pressing period in which the biometric stylus (3) is used to perform writing on an object such that the tip of the biometric stylus (3) abuts against the object;
wherein the touch force data includes a record of variations of the touch forces applied to the touch points on the handwriting input device (4) during a touch input period in which the handwriting pattern is being inputted on the handwriting input device (4); and
wherein, in the second procedure (700), the handwriting input device (4) determines (703) whether the pressing force data matches the touch force data by determining whether the record of variations of the pressing force matches the record of variations of the touch forces.

9. The authentication method of claim 8, **characterized in that** the pressing force data further includes a pressing time record that contains time points respectively of a beginning and an end of the record of variations of the pressing force;
wherein the touch force data further includes a touch time record that contains time points respectively of a beginning and an end of the record of variations of the touch forces; and
wherein, in the second procedure (700), the handwriting input device (4) determines (703) whether the pressing force data matches the touch force data further by determining whether the pressing time record matches the touch time record.

10. A system for authenticating a user using biometrics and digitized handwritten signature, comprising a biometric stylus (3) that includes a fingerprint sensor (30), a handwriting input device (4) and a verification server (5), wherein the biometric stylus (3), the handwriting input device (4) and the verification server (5) cooperate to perform the method of any one of the preceding claims.
